# EUROPEAN PATENT SPECIFICATION

(11) **EP 3 166 218 B1**
(45) Date of publication and mention of the grant of the patent: **01.12.2021**
(21) Application number: 15814830.4
(22) Date of filing: 03.06.2015
(51) Int. Cl.: H02M 7/48, H02M 1/32, H02H 3/05, H02H 7/08, H02H 7/12

(54) **POWER CONVERTER**
STROMRICHTER
CONVERTISSEUR DE PUISSANCE

(30) Priority: 04.07.2014 JP 2014138253
(43) Date of publication of application: 10.05.2017
(73) Proprietor: Fuji Electric Co., Ltd., Kawasaki-shi, Kanagawa 210-9530 (JP)
(72) Inventor: KOKUBUN, Hiroyuki, Kawasaki-shi Kanagawa 210-9530 (JP); SATO, Ikuya, Kawasaki-shi Kanagawa 210-9530 (JP); NAKATO, Yoshiyuki, Kawasaki-shi Kanagawa 210-9530 (JP); KIUCHI, Tadaaki, Kawasaki-shi Kanagawa 210-9530 (JP)
(74) Representative: Appelt, Christian W.
(86) International application number: PCT/JP2015/065962
(87) International publication number: WO 2016/002416

(56) References cited:
- EP-A2- 1 724 915
- EP-A2- 2 367 278
- EP-A2- 2 733 807
- JP-A- 2010 284 051
- JP-A- 2014 103 748
- US-A1- 2004 165 404
- US-A1- 2010 309 589

## Description

### [Technical Field]

The present invention relates to a control unit for a power converter that is provided with a safety function for shutting down a servo drive or an inverter driving loads, such as electric motors installed in various factories and buildings, in the event of a fault or abnormality (referred to as "fault or the like," hereinafter) in the servo drive or inverter drive.

### [Background Art]

Drive systems using power converters such as servo drives and inverter drives for electric motors have been used in various factories and buildings. Such drive systems are used to drive various production facilities such as fans, pumps and elevators. Fault or the like that occurs in a power converter can cause damage in the devices and personal injury.

In view of such background, many countries require the drive systems to have safety functions that meet various standards such as the international standards.

In order to realize such safety functions, however, not only do the safety functions need to comply with the various standards by law, but also diagnosis functions and support are necessary to determine whether the safety functions are reliably realized.

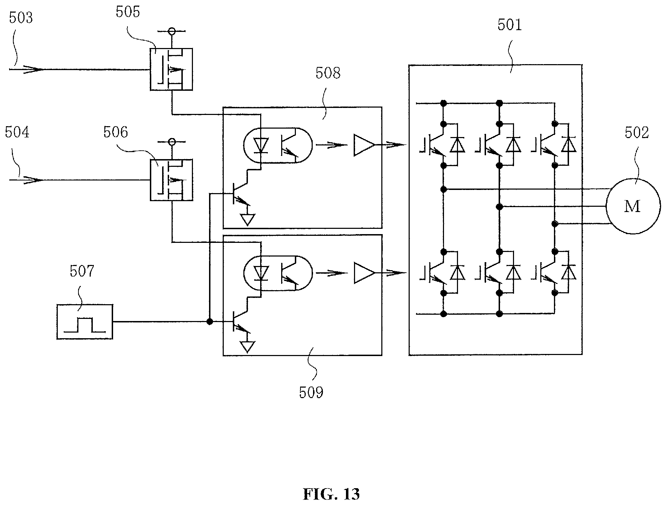

A power converter shown in Fig. 13 has been known as a conventional power converter that is capable of safely stopping an electric motor by means of a simple function. This power converter is described in PTL 1.

In Fig. 13, reference numeral 501 represents an inverter drive, and 502 an electric motor. In this conventional technique, safety stop means for safely stopping the electric motor 502 is configured as follows.

Specifically, during a normal operation state, safety stop signals 503, 504 are off and a PWM signal that is output from a PWM generation circuit 507 is input to a positive gate drive circuit 508 and a negative gate drive circuit 509. Consequently, these gate drive circuit 508, 509 are operated, and a semiconductor switching element of the inverter drive 501 is controlled, thereby driving the electric motor 502.

However, when the safety stop signal 503 or 504 is input in the event of a fault or the like in the device, an on-gate power shutdown circuit 505 or 506 is operated, thereby discontinuing the supply of power to an optocoupler inside the gate drive circuit 508 or 509. As a result, the gate signal is blocked and the inverter drive 501 is shut down to cause a free-run state of the electric motor 502, and thereafter the rotation of the electric motor 502 is stopped.

In addition, a safety control system described in PTL 2 has also been known as another conventional technique.

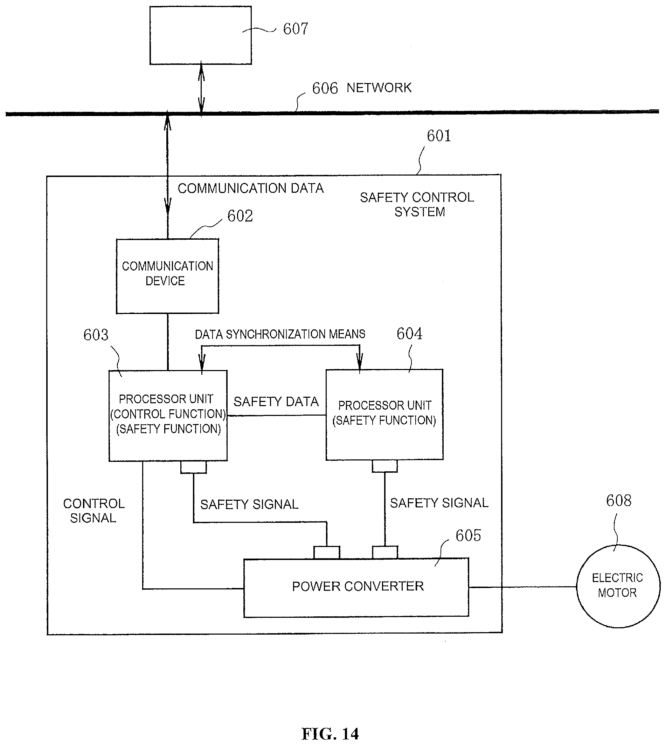

As shown in Fig. 14, this safety control system 601 has a communication device 602 connected to an external controller 607 by a network 606 and processor units 603, 604, wherein the processor units 603, 604 input a control signal and a safety signal to a power converter 605 that drives an electric motor 608. The processor unit 603 has a control function and a safety function, and the processor unit 604 has a safety function only.

When communication data received from the external controller 607 is control data, the processor unit 603 generates a control command based on the control data and controls the power converter 605. When the communication data is safety data, the safety data is transferred to the processor unit 604 as well, and both of the processor units 603, 604 execute, on the power converter 605, a safety process including shutting down and memory diagnosis. Result of processing the safety data by the processor units 603, 604 are compiled in the processor unit 603 by data synchronization means and converted into communication data, which is transmitted to the external controller 607.

In other words, in this system, the safety function is duplicated and the control function is unified.

EP 2 367 278 A2 discloses an electric power converter including a control unit outputting a PWM signal, a bridge circuit producing AC electric power supplied to a motor by making semiconductor switching devices turned-on and -off by the PWM signal, a cut off unit cutting off the PWM signal supplied to the bridge circuit from the control unit by a gate signal, and a monitoring unit generating a test signal for checking the cut off unit, the cut off unit is made to be provided with a switching circuit switching between the test signal and an external cut off signal to output one of the signals. US 2010/0309589 A1 refers to a control unit for a power converter, comprising two channels: one for the upper row of switches and one for the lower, where the controller receives shut-down signals in order to shut down the power converter. The controller comprises a failure detection circuit configured to receive the shut-down signals and to determine if the controller operates normally based on the result of a comparison of the signals.

### [Citation List]

### [Patent Literature]

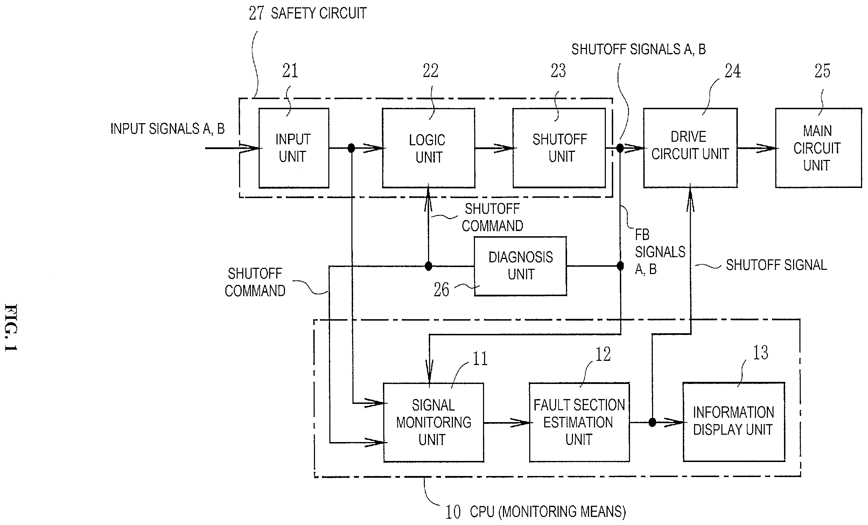

[PTL 1] Japanese Patent Application Publication No. 2013-247693 (paragraphs [0011] to [0017], Fig. 1, etc.)
[PTL 2] Japanese Patent No. 5494255 (paragraphs [0018] to [0024], Fig. 1 to 3, etc.)

### [Summary of Invention]

### [Technical Problem]

In the event of a fault or the like in a power converter or the like in operation, the power needs to be shutoff immediately to change the state of the power converter to a safety state. However, in case of PTL 1 (Fig. 13), for example, when a fault occurs in the safety circuit of the on-gate power shutdown circuit 505, 506 or the like, there is a possibility of not being able to shutoff the power by accurately determining such fault and changing the state of the power converter to a safety state.

In view of such problem, an inspection where the safety circuits are operated on a regular basis needs to be performed in order to check the normal operations of the safety circuits, but human errors in the procedures and oversights by the inspector can result in overlooking of the faults of the safety circuits.

In PTL 2 (Fig. 14), on the other hand, duplication of the safety function can lead to an improvement in reliability. However, the processor units 603, 604 that play the safety function need to be made redundant and the data need to be synchronized by using an external interruption signal line or the like between the units 603, 604, leaving room for improvement in terms of the system configuration and costs.

An object of the present invention is to provide a power converter that is capable of preventing such human errors and diagnosing the operation of a safety circuit easily and inexpensively.

### [Solution to Problem]

In order to achieve the foregoing object, a control unit according to independent claim 1 is provided. Preferred embodiments are disclosed in the dependent claims.

### [Advantageous Effects of Invention]

According to the present invention, the input signal for the safety circuit, the feedback signal of the shutoff signal, and the shutoff command from the diagnosis unit are input to the monitoring means such as a CPU, so the monitoring means can monitor the operations of the safety circuit and the diagnosis unit. The monitoring means can also estimate a fault section and perform a shutoff process and the like on the drive circuit unit, based on a combination of logic levels of the input signal and the feedback signal. Therefore, the present invention can provide a highly reliable power converter that can eliminate human errors occurring in diagnosis of the safety function.

Note that the present invention does not duplicate a CPU to realize the safety function. Thus, unlike the conventional technique of PTL 2 described above, the present invention can reduce the costs by simplifying the hardware and software.

### [Brief Description of Drawings]

[Fig. 1]
   Fig. 1 is a functional block diagram showing an embodiment of the present invention.
[Fig. 2]

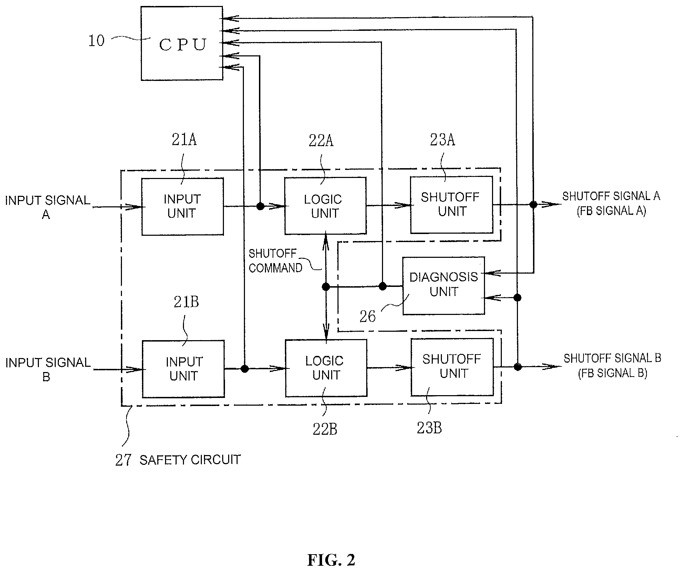

   Fig. 2 is a functional block diagram of the principal portions shown in Fig. 1.
[Fig. 3]

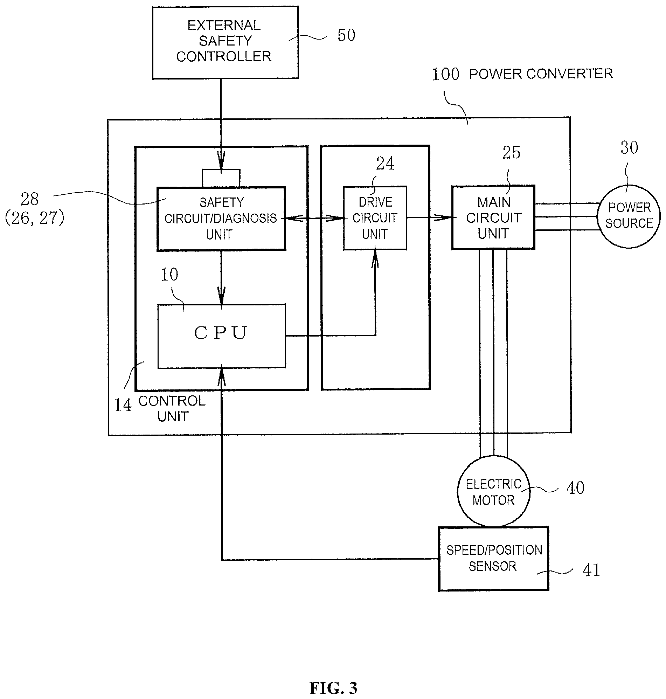

   Fig. 3 is an overall configuration diagram showing the embodiment of the present invention.
[Fig. 4]

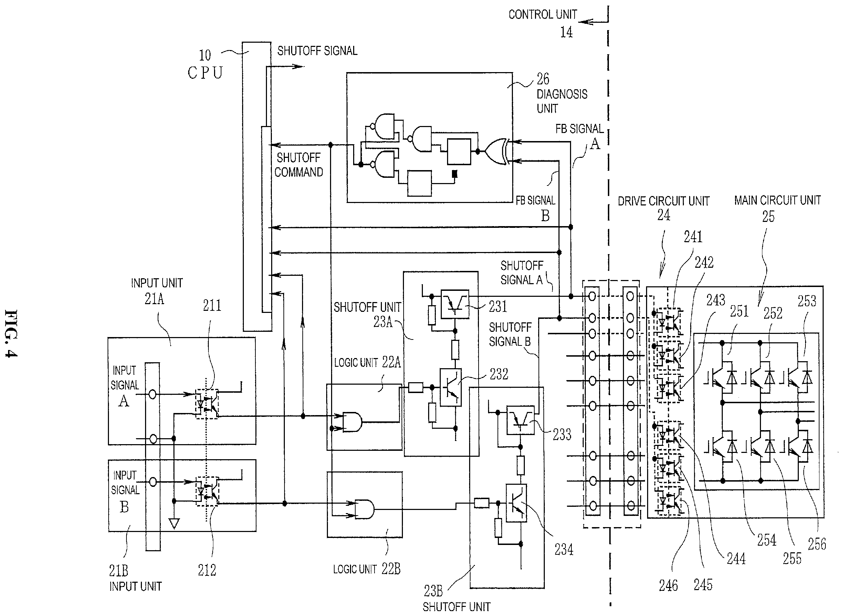

   Fig. 4 is a circuit diagram of the principal portions shown in Figs. 1 to 3.
[Fig. 5]

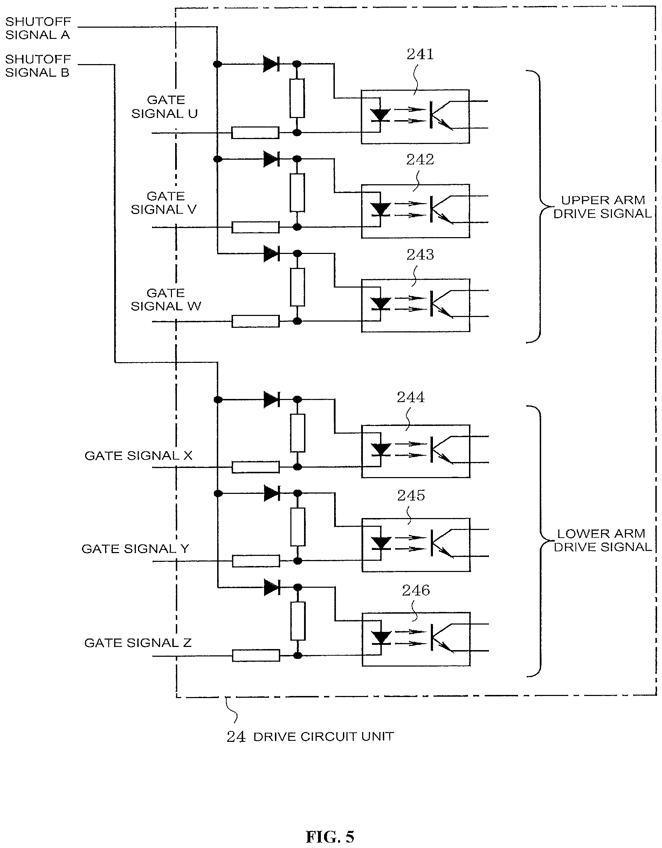

   Fig. 5 is a configuration diagram of a drive circuit unit according to the embodiment of the present invention.
[Fig. 6]

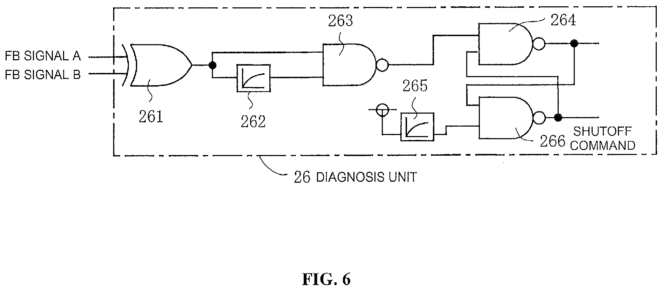

   Fig. 6 is a configuration diagram of a diagnosis unit according to the embodiment of the present invention.
[Fig. 7]

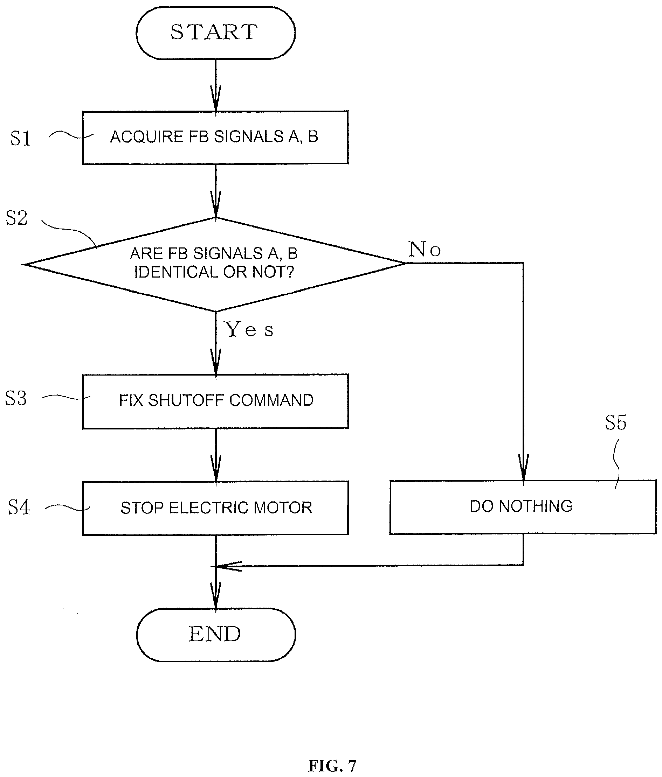

   Fig. 7 is a flowchart showing the operation of the diagnosis unit according to the embodiment of the present invention.
[Fig. 8]

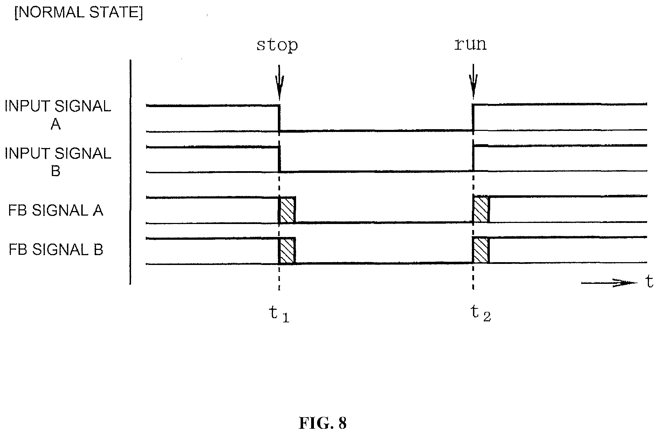

   Fig. 8 is a timing chart showing the operations performed during the normal state, according to the embodiment of the present invention.
[Fig. 9]

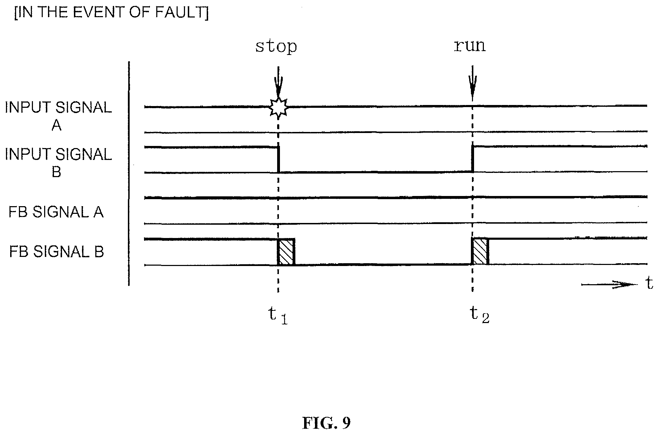

   Fig. 9 is a timing chart showing the operations performed in the event of a fault, according to the embodiment of the present invention.
[Fig. 10]

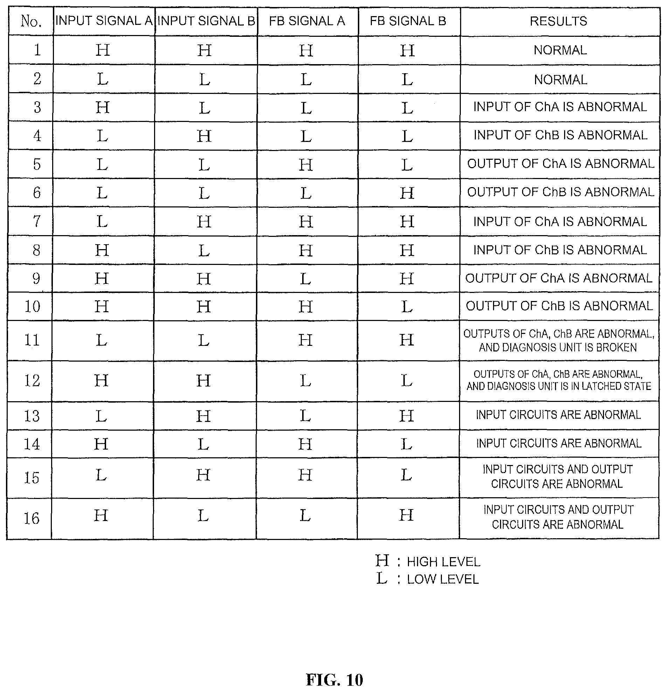

   Fig. 10 is a diagram showing a determination table of fault sections according to the embodiment of the present invention.
[Fig. 11]

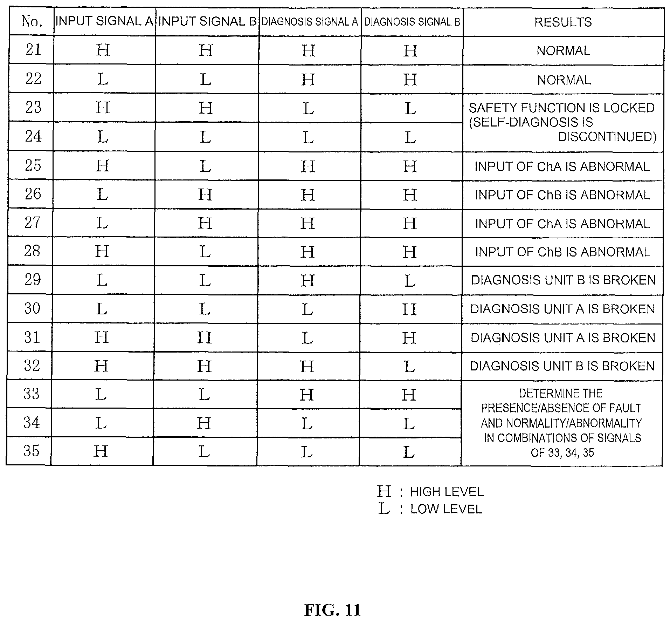

   Fig. 11 is a diagram showing a determination table of the fault sections according to the embodiment of the present invention.
[Fig. 12]

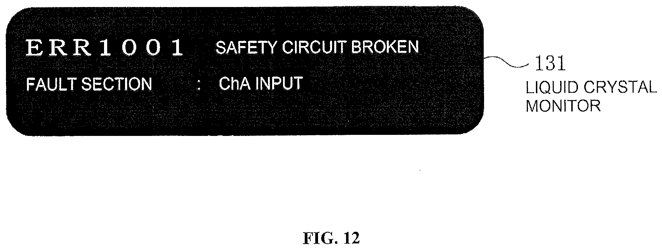

   Fig. 12 is a diagram showing an example of a screen of an information display unit according to the embodiment of the present invention.
[Fig. 13]
   Fig. 13 is a configuration diagram showing the conventional technique described in PTL 1.
[Fig. 14]
   Fig. 14 is a configuration diagram showing the conventional technique described in PTL 2.

### [Description of Embodiments]

An embodiment of the present invention is described hereinafter with reference to the drawings. First of all, Fig. 1 is a functional block diagram showing the embodiment of the present invention.

As shown in Fig. 1, input signals A, B in redundant two channels are input as commands to the input unit 21. The level of these input signals A, B are "high" when a power converter is run to drive an electric motor as a load, and is "low" when the power converter is stopped to stop the drive of the electric motor.

Note that the input unit 21 also functions to convert the input signals A, B to a predetermined level after isolating these signals by an optocoupler and to transmit the converted input signals.

The input signals A, B isolated by the input unit 21 are transferred to a logic unit 22 and a CPU 10.

The logic unit 22 is configured by, for example, an AND gate. The logic unit 22 obtains the logical products of a shutoff command that is output from a diagnosis unit 26 and the output signals of the input unit 21 (the input signals A, B), and outputs the results to a shutoff unit 23. The logic unit 22 may be configured by combining logic gates other than the AND gate.

The CPU 10 of monitoring function is operated as a signal monitoring unit 11, a fault section estimation unit 12, and an information display unit 13 through software functions. The signal monitoring unit 11 receives input of the output signals from the input unit 21, the shutoff command from the diagnosis unit 26, and duplicated shutoff signals (feedback (FB) signals) A, B from the shutoff unit 23. This signal monitoring unit 11 monitors the state of a safety circuit 27 configured by the input unit 21, logic unit 22 and shutoff unit 23 and the state of the diagnosis unit 26, and is capable of detecting a fault of any of these sections. The fault section estimation unit 12 estimates a fault section based on an output from the signal monitoring unit 11, and the information display unit 13 displays the section on a display such as a liquid crystal monitor, LED, or the like.

Based on an output from the logic unit 22, the shutoff unit 23 outputs the duplicated shutoff signals A, B. The shutoff unit 23 is formed on the control substrate side where a gate drive circuit, which is described hereinafter, is mounted.

The shutoff signals A, B are transmitted to a main circuit unit 25 of the power converter through a drive circuit unit 24. The drive circuit unit 24 has an optocoupler and a gate drive circuit, as described hereinafter. When the power converter is running, an operation power source of the optocoupler is turned ON and thereby the gate drive circuit is operated. When the power converter is stopped, the operation power source is turned OFF by the shutoff signals A, B, thereby stopping the operation of the gate drive circuit.

The main circuit unit 25 is configured with a bridge circuit of a semiconductor switching element configuring, for example, an inverter, and the electric motor is connected as a load to the output side of the main circuit unit 25.

As described above, when the power converter is shut down, the operation of the drive circuit unit 24 can be stopped using the shutoff signals A, B, and, for safety, the shutoff signals that are output from the fault section estimation unit 12 can be applied to the drive circuit unit 24 to stop the operation thereof.

Fig. 2 shows the principal portions shown in Fig. 1 (the safety circuit 27 and the CPU 10).

As described above, since the components of the safety circuit 27 are duplicated, the safety circuit 27 has input units 21A, 21B, logic units 22A, 22B, and shutoff units 23A, 23B. The diagnosis unit 26 inputs the shutoff signals A, B as the FB signals A, B, the shutoff signals A, B being output from the shutoff units 23A, 23B, and determines whether these FB signals A, B are identical or not, to diagnose a fault.

The diagnosis (shutoff command) is sent to the logic units 22A, 22B where the logical products of the diagnosis and the output signals from the input units 21A, 21B are obtained.

The diagnosis is sent to the CPU 10 as well.

Fig. 3 is an overall configuration diagram showing the embodiment of the present invention. A power converter 100 has a control unit 14 configured by the CPU 10 and a safety circuit/diagnosis unit 28, the drive circuit unit 24, and the main circuit unit 25. The safety circuit/diagnosis unit 28 is configured by the safety circuit 27 and the diagnosis unit 26 that are mentioned above, wherein an input signal (command) from an external safety controller 50 is input to the safety circuit/diagnosis unit 28.

A power source 30 such as a three-phase AC power source and an electric motor 40 are connected to the main circuit unit 25. An output signal from a speed/position sensor 41 attached to the electric motor 40 is input to the CPU 10.

Next, Fig. 4 is a circuit diagram showing the principal portions corresponding to those shown in Figs. 1 to 3. More specifically, Fig. 4 is a diagram embodying the functional block diagram of Fig. 2 and the configurations of the drive circuit unit 24 and main circuit unit 25 shown in Figs. 1 and 3.

As shown in Fig. 4, reference numerals 211 and 212 represent optocouplers provided in the input units 21A and 21B respectively. Reference numerals 231 to 234 represent semiconductor switching elements configuring the shutoff units 23A and 23B.

Furthermore, reference numerals 241 to 246 are optocouplers provided in the drive circuit unit 24, and reference numerals 251 to 256 represent semiconductor switching elements such as IGBTs that configure the main circuit unit 25.

Fig. 5 is a diagram illustrating the configuration of the drive circuit unit 24 in detail. The shutoff signal A and gate signals U, V, W corresponding to the upper arm switching elements 251 to 253 of the main circuit unit 25 are input to the optocouplers 241 to 243. The shutoff signal B and gate signals X, Y, Z corresponding to the lower arm switching elements 254 to 256 are input to the optocouplers 244 to 246.

The drive circuit unit 24 realizes a shutoff function by shutting off the power sources of the optocouplers 241 to 246 by means of "low" level shutoff signals A, B and stopping the gate signals U, V, W, X, Y, Z corresponding to the switching elements 251 to 256.

Returning to Fig. 4, the diagnosis unit 26 receives the two channels of FB signals A, B from the shutoff units 23A, 23B and monitors whether these signals are identical or not. If the FB signals A, B are not identical to each other, it is determined that some sort of component fault is present within the circuit. The component fault means, for example, open circuit of a pin of a component, short circuit between pins, and stuck-at of signals (short circuit with 5 V power supply wiring, short circuit with GND, etc.).

Here, the diagnosis unit 26 is configured with a logic IC and the like as shown in Fig. 6. In Fig. 6, reference numeral 261 represents a XOR (exclusive OR) gate, 262 and 265 RC filters, 263 a NAND gate, and 264 and 266 NAND gates configuring a latch circuit.

Fig. 7 is a flowchart showing the operations of the diagnosis unit 26. The XOR gate 261 of the diagnosis unit 26 acquires the FB signals A, B (step S1 in Fig. 7), and when these signals are not identical to each other (YES in step S2), the level of the output from the XOR gate 261 becomes "high." When these signals are identical to each other (NO in step S2), the level of the output from the XOR gate 261 becomes "low."

The RC filters 262 and 265 wait for a certain period of time, such as 100 [ms], to determine the presence of a component fault described above, and the time constant thereof is set to match the threshold of the "high" level of the logic IC.

When the level of the output from the XOR gate 261 is "high" (when the FB signals A, B are not identical), the level of the output of the RC filter 262 becomes "high" after a lapse of the time constant. At this moment, the level of the two input of the NAND gate 263 becomes "high" and the level of the output from the same becomes "low." Consequently, the NAND gate 266 configuring the latch circuit outputs a "low" level shutoff command, which is then fixed at the "low" level (step S3). In other words, when the FB signals A, B are not identical to each other, the "low" level shutoff command is fixed as active.

As a result, the levels of the outputs from the logic units 22A and 22B shown in Fig. 4 become "low." Then, the shutoff signals A, B are made active, and the power sources of the optocouplers 241 to 246 of the drive circuit unit 24 are shut down, thereby stopping the operation of the electric motor 40 by the main circuit unit 25 (step S4).

Furthermore, when the level of the output from the XOR gate 261 is "low" (when the FB signals A, B are identical), the level of the two input from the NAND gate 263 is "low" and the level of the output from the same is "high" and input to either one of the input terminals of the NAND gate 264. At this moment, when the level of the shutoff command that is input to the other input terminal of the NAND gate 264 is "high," the level of the output from the NAND gate 264 becomes "low," and this signal is input to either one of the input terminals of the NAND gate 266. However, the signal level of the other input terminal of the NAND gate 266 is "high." Therefore, the level of the output from the NAND gate 266 is kept "high."

It should be noted that when the level of the shutoff command is "low" when the level of either one of the inputs of the NAND gate 264 is "high," the level of the output from the NAND gate 264 becomes "high," and this signal is input to either one of the input terminals of the NAND gate 266. In this case as well, the signal level of the other input terminal of the NAND gate 266 is "high," keeping the output level of the NAND gate 266 "low."

In other words, in a case where the FB signals A, B are identical to each other, the diagnosis unit 26 keeps the original state without performing any particular operation (step S5).

Next, Figs. 8 and 9 are timing charts each showing the operations according to the present embodiment.

Fig. 8 shows the input signals A, B and the FB signals A, B for running or stopping the electric motor by means of the operations of the power converter 100 during the normal state of the safety circuit 27. Fig. 9 shows the input signals A, B and the FB signals A, B that are used in the event of a fault in, for example, the input unit 21B. In these diagrams, "stop" (time t₁) and "run" (time t₂) indicate the times when the power converter 100 is stopped and run.

During the normal state shown in Fig. 8, the input signals A, B are identical to each other, as well as the FB signals A, B. During the time period in which the power converter 100 is stopped (t₁ to t₂), the levels of the outputs from the logic units 22A, 22B shown in Fig. 4 are "low." Therefore, the supply of power to the electric motor 40 is discontinued. During the period in which the power converter 100 is run, such as prior to the time t₁ and after the time t₂, the safety circuit is normal, and therefore not active.

In Fig. 9, on the other hand, suppose that a fault occurs in, for example, the optocoupler 212 of the input unit 21b at the time t₁. In such a case, the input signals A and B are not identical to each other, as well as the FB signals A, B, making the safety circuit active and discontinuing the supply of power to the electric motor 40. It should be noted that the diagnosis unit 26 continues to output shutoff commands once the safety circuit becomes active, as described above.

Next, the operations of the signal monitoring unit 11 and fault section estimation unit 12 of the CPU 10 shown in Fig. 1 are described.

Fig. 10 is a determination table used for estimating a fault section (a section with a potential fault) by using the input signals A, B and the FB signals A, B. The signal monitoring unit 11 acquires the input signals A, B and the FB signals A, B through a digital input (DI) terminal of the CPU 10, and the fault section estimation unit 12 estimates a fault section for each case (No. 1 to No. 16), based on the combinations of the signal levels ("high" level, "low" level). The terms "abnormal" and "fault" that are described in this determination table are not intended to mean different things but are used to indicate that none of the cases is normal.

In addition, "Ch (channel) A" means the path through which the input signal A is transmitted (the path of input unit 21A -> logic unit 22A -> shutoff unit 23A in the safety circuit 27 shown in Figs. 1 and 2), and "Ch (channel) B" means the path through which the input signal B is transmitted (the path of input unit 21B -> logic unit 22B -> shutoff unit 23B in the safety circuit 27).

Some of the cases shown in Fig. 10 are described hereinafter.

In case No. 1 and case No. 2, for example, because the levels of the input signals A, B and the levels of the FB signals A, B are all identical, it is determined that these cases have no fault and are normal. Incidentally, case No. 1 corresponds to the time when the power converter 100 is run, and case No. 2 corresponds to the time when the power converter 100 is stopped.

In case No. 5, the levels of the input signals A, B are identical to each other at the "low" level, but the levels of the FB signals A, B are not identical to each other and the level of the FB signal A is not identical to the levels of the input signals A, B. Therefore, it is highly possible that an output circuit of the Ch (channel) A (e.g., the shutoff unit 23A) is abnormal. In case No. 8, the levels of the FB signals A, B are identical to each other at the "high" level, but the levels of the input signals A, B are not identical to each other and the level of the input signal B is not identical to the levels of the FB signals A, B. Therefore, it is highly possible that an input circuit of the Ch (channel) B (e.g., the input unit 21B) is abnormal.

In other cases No. 3, No. 4, No. 6, No. 7, No. 9, and No. 10 as well, the same method can be used to estimate whether the input circuits or output circuits of the ChA or ChB are abnormal or not.

In case No. 11, the levels of the input signals A, B are identical to each other at the "low" level and the levels of the FB signals A, B are also identical to each other at the "high" level, but the levels of the input signals A, B are not identical to the levels of the FB signals A, B.

In this case, since it is unlikely that the input circuits of the ChA, ChB become abnormal at the same time, the "low" level of the input signals A, B can be considered normal, which means that the input circuits of the ChA, ChB are considered normal. Therefore, it is highly possible that the FB signals A, B of a different level than the input signals A, B are abnormal. In other words, it is highly possible that the output circuits of the ChA, ChB (e.g., the shutoff units 23A, 23B) are abnormal.

In this case, because the levels of the input signals of the diagnosis unit 26 (the FB signals A, B) are identical to each other at the "high" level, the level of the output signal of the diagnosis unit 26 (the shutoff command) should be "high." However, if the level of the output signal of the diagnosis unit 26 (the shutoff command) becomes "low" due to a fault in the diagnosis unit 26, the level of the outputs from the logic units 22A, 22B become "low." Consequently, it is considered that the levels of the FB signals A, B are "high" due to the abnormalities in the output circuits of the ChA, ChB (e.g., the shutoff units 23A, 23B) as described above.

Thus, in case No. 11, it is highly possible that the output circuits of the ChA, ChB are abnormal and that a fault occurs in the diagnosis unit 26.

Moreover, in case No. 12, the levels of the input signals A, B are identical to each other at the "high" level and the levels of the FB signals A, B are also identical to each other at the "low" level, but the levels of the input signals A, B are not identical to the levels of the FB signals A, B.

In this case as well, since it is unlikely that the input circuits of the ChA, ChB become abnormal at the same time, the "high" level of the input signals A, B can be considered normal, which means that the input circuits of the ChA, ChB are considered normal. Therefore, it is highly possible that the FB signals A, B of a different level than the input signals A, B are abnormal. In other words, it is highly possible that the output circuits of the ChA, ChB are abnormal.

In addition, because the levels of the input signals (FB signals A, B) of the diagnosis unit 26 are identical to each other at the "low" level, the level of the output signal (shutoff command) from the diagnosis unit 26 is "high." Specifically, when the levels of the input signals (FB signals A, B) of the diagnosis unit 26 are "low" and the level of the output signal (shutoff command) is "high," the diagnosis unit 26 is considered to be in a latched state.

Therefore, in case No. 12, it is highly possible that the output circuits of the ChA, ChB are abnormal and that the diagnosis unit 26 is in a latched state.

Also, in case No. 13 and case No. 14, the levels of the input signals A, B are not identical to each other, as well as the levels of the FB signals A, B. Moreover, the level of the input signal A is identical to the level of the FB signal A, and the level of the input signal B is identical to the level of the FB signal B.

In this case, because the relationship of the FB signals to the input signals is valid for both the ChA and ChB, the output circuits of the ChA, ChB are not considered abnormal, and it is highly possible that the input circuits of the ChA, ChB are abnormal in view of the fact that the levels of the input signals A, B are not identical to each other.

Also, in case No. 15 and case No. 16, the levels of the input signals A, B are not identical to each other, as well as the levels of the FB signals A, B. Moreover, the level of the input signal A is not identical to the level of the FB signal A, and the level of the input signal B is not identical to the level of the FB signal B.

In this case, because the relationship of the FB signals to the input signals is abnormal for both the ChA and ChB and the levels of the input signals A, B are not identical to each other, it is highly possible that the input circuits and output circuits of the ChA, ChB are abnormal.

As described above, the signal monitoring unit 11 and the fault section estimation unit 12 estimate a fault section based on the combinations of the input signals A, B and the FB signals A, B. The fault section estimation unit 12 displays, as shown in Fig. 12, the fault section as "ChA input," on a display unit such as a liquid crystal monitor 131 by means of the information display unit 13 shown in Fig. 1.

Next, Fig. 11 shows a determination table that is simulated when the diagnosis unit 26 described above is duplicated.

Specifically, although not shown, FB signals A, B that are output from the shutoff units 23A, 23B are input to two diagnosis units (diagnosis units A, B) sharing the same configuration, and diagnosis signals (shutoff commands) A, B are obtained from these diagnosis units A, B. In other words, the determination table shown in Fig. 11 is for the signal monitoring unit 11 and the fault section estimation unit 12 to estimate a fault section by using the input signals A, B and the abovementioned diagnosis signals A, B.

Some of the cases shown in Fig. 11 are described hereinafter.

For example, in case No. 21 and case No. 22, the levels of the diagnosis signals A, B are "high" for the input signals A, B having the identical levels. Therefore, these cases are determined as normal.

In case No. 23 and case No. 24, the levels of the diagnosis signals A, B are "low" for the input signals A, B having the identical levels. In this case, the levels of the diagnosis signals A, B are "low" even though the levels of the input signals A, B are identical to each other. That is, a shutoff command is output. Therefore, it is highly possible that the safety function is locked (self-diagnosis is discontinued).

In case No. 25 to No. 28, the levels of the input signals A, B are not identical. Thus, the levels of the diagnosis signals A, B that should be "low" are actually "high." In such a case, it is unlikely that both the diagnosis units A, B are broken. Therefore, the "high" level of the diagnosis signals A, B is considered normal, and therefore it is highly possible that the input circuit of the ChA or ChB is abnormal.

In cases No. 29 to No. 32, the levels of the input signals A, B are identical, but the levels of the diagnosis signals A, B are not identical to each other. In such a case, it is unlikely that both the input units 21A, 21B are broken. Therefore, the levels of the input signals A, B are considered normal, and therefore it is highly possible that a fault has occurred in the diagnosis unit A or the diagnosis unit B.

Cases No. 33 to No. 35 transition in such a manner that the level of the input signal A or B changes from the state shown in case No. 33 (a case that is determined as normal, as with case No. 22) to the state shown in case No. 34 or No. 35. These cases No. 33 to No. 35 are determined to have a fault or to be normal, depending on whether the diagnosis signals A, B shown in cases No. 34 and No. 35 can be obtained or not.

These cases No. 33 to No. 35 are effective in determining the presence of faults in mainly the diagnosis signals A, B.

As described above, according to the present embodiment, a section that is abnormal or has a fault can be estimated almost precisely by monitoring the states of the safety circuit 27 (the input units 21A, 21B, logic units 22A, 22B, shutoff units 23A, 23B) and diagnosis unit 26 that play the safety function of the power converter 100.

### [Industrial Applicability]

The present invention can be utilized in various drive systems including power converters with a safety function for shutting down a device in the event of a fault thereof, such as inverters, converters, and choppers, as well as the type of power converter described in the present invention.

### [Reference Signs List]

- 10:: CPU (monitoring means)
- 11:: Signal monitoring unit
- 12:: Fault section estimation unit
- 13:: Information display unit
- 14:: Control unit
- 21, 21A, 21B:: Input unit
- 22, 22A, 22B:: Logic unit
- 23, 23A, 23B:: Shutoff unit
- 24:: Drive circuit unit
- 25:: Main circuit unit
- 26:: Diagnosis unit
- 27:: Safety circuit
- 28:: Safety circuit/diagnosis unit
- 30:: Power source
- 40:: Electric motor
- 41:: Speed/position sensor
- 50:: External safety controller
- 131:: Liquid crystal monitor
- 211, 212, 241 to 246:: Optocoupler
- 231 to 234, 251 to 256:: Semiconductor switching element
- 261:: XOR (exclusive OR) gate
- 262, 265:: RC filter
- 263, 264, 266:: NAND gate

## Claims

1. A control unit (14) connectable to a power converter (100), wherein the power converter (100) comprises a drive circuit unit (24) and a main circuit unit (25), wherein the main circuit unit (25) is configured with a bridge circuit, and wherein the power converter (100) is configured to supply power to a load (40) by using a drive signal that is output from the drive circuit unit (24), the control unit (14) comprising:
a safety circuit (27) that is configured to operate the drive circuit unit (24) to generate the drive signal based on an external command, and send a shutoff signal to the drive circuit unit (24) in the event of a fault in the power converter, to shut down the main circuit unit (25), wherein
the safety circuit (27) has a pair of channels, wherein a first channel of the pair of channels corresponds to the upper arm of switching elements and a second channel of the pair of channels corresponds to the lower arm of switching elements of the main circuit (25),
each of the channels comprising a respective input unit (21A, 21B), a respective logic unit (22A, 22B) and a respective shutoff unit (23A, 23B),
wherein
the input unit (21A, 21B) is configured to generate an input signal for commanding running/stopping of the main circuit unit (25),
the logic unit (22A, 22B) is configured to receive the input signal as one of its inputs, and
the shutoff unit (23A, 23B) is configured to generate the shutoff signal based on the output signal from the logic unit (22A, 22B);
the control unit (14) further comprising:
a diagnosis unit (26) that is configured to generate a shutoff command by using the shutoff signal as a feedback signal, wherein the logic unit (22A, 22B) is configured to receive the shutoff command as the other one of its inputs; and
monitoring means (10), which, based on the input signal, the shutoff command, and the feedback signal, is configured to monitor states of the safety circuit (27) and the diagnosis unit (26) to estimate the presence/absence of a fault, generate a shutoff signal when the presence of a fault section is determined, send the shutoff signal to the drive circuit unit (24), and shut down the main circuit unit (25), wherein
the diagnosis unit (26) is configured to receive input of the feedback signals (A, B) from the shutoff unit (23, 23A, 23B) of each of the channels, wherein the diagnosis unit (26) is configured such that, when the feedback signals (A, B) are not identical to each other, the shutoff command is fixed as active, thereby stopping the operation of the load by the main circuit unit (25) and
the monitoring means (10) is configured to receive, in addition to the shutoff command, input of the input signals from the input unit (21, 21A, 21B) of each of the channels and the feedback signals (A, B) from the shutoff unit (23, 23A, 23B) of each of the channels.

2. The control unit (14) according to claim 1, wherein the diagnosis unit (26) is duplicated, with a pair of diagnosis units (26) being provided.

3. The control unit (14) according to claim 1 or 2, wherein the monitoring means (10) is configured to estimate a fault section based on a combination of logic levels of the input signal and the feedback signal of each of the channels.

4. The control unit (14) according to claim 3, wherein the monitoring means (10) is capable of estimating an input circuit or an output circuit of at least any of the channels as the fault section.

## Patentansprüche

1. Regelungseinheit (14), die mit einem Stromrichter (100) verbindbar ist, wobei der Stromrichter (100) eine Treiberschaltungseinheit (24) und eine Hauptschaltungseinheit (25) umfasst, wobei die Hauptschaltungseinheit (25) mit einer Brückenschaltung ausgestattet ist, und wobei der Stromrichter (100) dazu ausgelegt ist, Leistung an eine Last (40) zu liefern, unter Verwendung eines Treibersignals, das von der Treiberschaltungseinheit (24) ausgegeben wird, wobei die Regelungseinheit (14) umfasst:
eine Sicherheitsschaltung (27), die dazu ausgelegt ist, die Treiberschaltungseinheit (24) zu betreiben, so dass sie das Treibersignal basierend auf einem externen Befehl erzeugt, und im Falle eines Fehlers in dem Stromrichter ein Abschaltsignal an die Treiberschaltungseinheit (24) zu senden, um die Hauptschaltungseinheit (25) abzuschalten, wobei
die Sicherheitsschaltung (27) ein Paar von Kanälen aufweist, wobei ein erster Kanal des Paares von Kanälen dem oberen Zweig von Schaltelementen und ein zweiter Kanal des Paares von Kanälen dem unteren Zweig von Schaltelementen der Hauptschaltung (25) entspricht, wobei jeder der Kanäle eine jeweilige Eingabeeinheit (21A, 21B), eine jeweilige Logikeinheit (22A, 22B) und eine jeweilige Abschalteinheit (23A, 23B) umfasst, wobei
die Eingabeeinheit (21A, 21B) dazu ausgelegt ist, ein Eingabesignal zum Steuerung des Laufens/Stoppens der Hauptschaltungseinheit (25) zu erzeugen,
die Logikeinheit (22A, 22B) dazu ausgelegt ist, das Eingabesignal als eine ihrer Eingaben zu empfangen,
und die Abschalteinheit (23A, 23B) dazu ausgelegt ist, das Abschaltsignal basierend auf dem Ausgangssignal der Logikeinheit (22A, 22B) zu erzeugen;
wobei die Regelungseinheit (14) ferner umfasst:
eine Diagnoseeinheit (26), die dazu ausgelegt ist, einen Abschaltbefehl unter Verwendung des Abschaltsignals als Rückmeldungssignal zu erzeugen, wobei die Logikeinheit (22A, 22B) dazu ausgelegt ist, den Abschaltbefehl als die andere ihrer Eingaben zu empfangen; und
Überwachungsmittel (10), die dazu ausgelegt sind, basierend auf dem Eingabesignal, den Abschaltbefehl, und dem Rückmeldungssignal Zustände der Sicherheitsschaltung (27) und der Diagnoseeinheit (26) zu überwachen, um das Vorhandensein/Fehlen eines Fehlers zu ermitteln, ein Abschaltsignal zu erzeugen, wenn das Vorhandensein einer Fehlersektion bestimmt wird, das Abschaltsignal an die Treiberschaltungseinheit (24) zu senden, und die Hauptschaltungseinheit (25) abzuschalten, wobei
die Diagnoseeinheit (26) dazu ausgelegt ist, Eingaben der Rückmeldungssignale (A, B) von der Abschalteinheit (23, 23A, 23B) jedes der Kanäle zu empfangen, wobei die Diagnoseeinheit (26) dazu ausgelegt ist, wenn die Rückmeldungssignale (A, B) nicht identisch sind, den Abschaltbefehl als aktiv festzulegen, wodurch der Betrieb der Last durch die Hauptschaltungseinheit (25) gestoppt wird, und
die Überwachungsmittel (10) dazu ausgelegt sind, zusätzlich zu dem Abschaltbefehl Eingaben der Eingabesignale von der Eingabeeinheit (21, 21A, 21B) jedes der Kanäle und die Rückmeldungssignale (A, B) von der Abschalteinheit (23, 23A, 23B) jedes der Kanäle zu empfangen.

2. Regelungseinheit (14) nach Anspruch 1, **dadurch gekennzeichnet, dass** die Diagnoseeinheit (26) doppelt ausgeführt ist, wobei ein Paar von Diagnoseeinheiten (26) vorgesehen ist.

3. Regelungseinheit (14) nach Anspruch 1 oder 2, wobei die Überwachungsmittel (10) dazu ausgelegt sind, eine Fehlersektion basierend auf einer Kombination von Logikpegeln des Eingabesignals und des Rückmeldungssignals jedes der Kanäle zu ermitteln.

4. Regelungseinheit (14) nach Anspruch 3, wobei die Überwachungsmittel (10) dazu in der Lage sind, eine Eingangsschaltung oder eine Ausgangsschaltung von mindestens einem der Kanäle als die Fehlersektion zu ermitteln.

## Revendications

1. Unité de commande (14) pouvant être connectée à un convertisseur de puissance (100), dans laquelle le convertisseur de puissance (100) comprend une unité de circuit d'attaque (24) et une unité de circuit principal (25), dans laquelle l'unité de circuit principal (25) est configurée avec un circuit en pont, et dans laquelle le convertisseur de puissance (100) est configuré de manière à alimenter électriquement une charge (40) en utilisant un signal d'attaque qui est fourni en sortie à partir de l'unité de circuit d'attaque (24), l'unité de commande (14) comprenant :
un circuit de sécurité (27) qui est configuré de manière à faire fonctionner l'unité de circuit d'attaque (24) en vue de générer un signal d'attaque sur la base d'une instruction externe, et à envoyer un signal de coupure à l'unité de circuit d'attaque (24) dans le cas d'un défaut dans le convertisseur de puissance, en vue d'arrêter l'unité de circuit principal (25), dans lequel
le circuit de sécurité (27) présente une paire de canaux, dans lequel un premier canal de la paire de canaux correspond au bras supérieur d'éléments de commutation et un second canal de la paire de canaux correspond au bras inférieur d'éléments de commutation de l'unité de circuit principal (25), chacun des canaux comprenant une unité d'entrée respective (21A, 21B), une unité logique respective (22A, 22B) et une unité de coupure respective (23A, 23B) ;
dans laquelle :
l'unité d'entrée (21A, 21B) est configurée de manière à générer un signal d'entrée pour commander le fonctionnement / l'arrêt de l'unité de circuit principal (25) ;
l'unité logique (22A, 22B) est configurée de manière à recevoir le signal d'entrée en tant que l'une de ses entrées, et l'unité de coupure (23A, 23B) est configurée de manière à générer le signal de coupure sur la base du signal de sortie en provenance de l'unité logique (22A, 22B) ;
l'unité de commande (14) comprenant en outre :
une unité de diagnostic (26) qui est configurée de manière à générer une instruction de coupure en utilisant le signal de coupure en tant qu'un signal de rétroaction, dans laquelle l'unité logique (22A, 22B) est configurée de manière à recevoir l'instruction de coupure en tant que l'autre de ses entrées ; et
un moyen de surveillance (10) qui, sur la base du signal d'entrée, de l'instruction de coupure et du signal de rétroaction, est configuré de manière à surveiller des états du circuit de sécurité (27) et de l'unité de diagnostic (26) en vue d'estimer la présence / l'absence d'un défaut, générer un signal de coupure lorsque la présence d'une section de défaut est déterminée, envoyer le signal de coupure à l'unité de circuit d'attaque (24), et arrêter l'unité de circuit principal (25), dans laquelle
l'unité de diagnostic (26) est configurée de manière à recevoir une entrée des signaux de rétroaction (A, B) en provenance de l'unité de coupure (23, 23A, 23B) de chacun des canaux, dans laquelle l'unité de diagnostic (26) est configurée de sorte que, lorsque les signaux de rétroaction (A, B) ne sont pas mutuellement identiques, l'instruction de coupure est définie comme active, ce qui permet d'arrêter par conséquent le fonctionnement de la charge par le biais de l'unité de circuit principal (25) ; et
le moyen de surveillance (10) est configuré de manière à recevoir, outre l'instruction de coupure, une entrée des signaux d'entrée en provenance de l'unité d'entrée (21, 21A, 21B) de chacun des canaux, et des signaux de rétroaction (A, B) en provenance de l'unité de coupure (23, 23A, 23B) de chacun des canaux.

2. Unité de commande (14) selon la revendication 1, dans laquelle l'unité de diagnostic (26) est dupliquée, une paire d'unités de diagnostic (26) étant fournie.

3. Unité de commande (14) selon la revendication 1 ou 2, dans laquelle le moyen de surveillance (10) est configuré de manière à estimer une section de défaut sur la base d'une combinaison de niveaux logiques du signal d'entrée et du signal de rétroaction de chacun des canaux.

4. Unité de commande (14) selon la revendication 3, dans laquelle le moyen de surveillance (10) est en mesure d'estimer un circuit d'entrée ou un circuit de sortie d'au moins l'un quelconque des canaux comme étant la section de défaut.
